Europäisches Patentamt

European Patent Office

Office européen des brevets

(11) Veröffentlichungsnummer: **0 306 065**
**A2**

## EUROPÄISCHE PATENTANMELDUNG

(21) Anmeldenummer: 88201477.2

(22) Anmeldetag: 12.07.88

(51) Int. Cl.⁴: **F16C 33/14**

(30) Priorität: 29.08.87 DE 3728951

(43) Veröffentlichungstag der Anmeldung:
08.03.89 Patentblatt 89/10

(84) Benannte Vertragsstaaten:
**AT DE ES FR GB IT SE**

(71) Anmelder: **KOLBENSCHMIDT**
**Aktiengesellschaft**
**Karl-Schmidt-Strasse 8/12 Postfach 1351**
**D-7107 Neckarsulm(DE)**

(72) Erfinder: **Becker, Karl**
**Buchenweg 4**
**D-6837 St. Leon-Rot(DE)**
Erfinder: **Berger, Alfred**
**Waldstrasse 46**
**D-6908 Wiesloch(DE)**
Erfinder: **Iwansky, Joachim**
**Seitenstrasse 1**
**D-7522 Philippsburg 3(DE)**
Erfinder: **Köble, Roland**
**Drosselweg 2**
**D-6921 Ittlingen(DE)**
Erfinder: **Back, Karl**
**Hauptstrasse 162**
**D-6837 St. Leon-Rot(DE)**

(74) Vertreter: **Rieger, Harald, Dr.**
**Reuterweg 14**
**D-6000 Frankfurt am Main(DE)**

(54) **Gerollte Buchse für Gleitlager.**

(57) Eine gerollte Buchse für Gleitlager ohne Bearbeitungszugabe in der Lagerbohrung ist aus einem Bandabschnitt hergestellt und besitzt eine über die ganze Lagerbreite gehende Stoßfuge. Um die zulässigen Abmaßbereiche der Nennmaße einzuengen, ist die Stoßfuge durch Ladungsträgerstrahlschweißen geschlossen.

Fig.1

## Gerollte Buchse für Gleitlager

Die Erfindung betrifft eine gerollte Buchse für Gleitlager, hergestellt aus einem Bandabschnitt, vorzugsweise aus Mehrschicht-Werkstoff, insbesondere der Kombination Stahl/Kunststoff, mit über die ganze Lagerbreite gehender Stoßfuge und ohne Bearbeitungszugabe in der Lagerbohrung.

Gerollte Buchsen für Gleitlager sind vielfach im Kraftfahrzeugbau im Einsatz. Im freien Zustand ist eine gerollte Buchse unrund und ihre Stoßfuge offen. Nach dem Einpressen ist die gerollte Buchse in der Regel rund, ihre Stoßfuge ist geschlossen. Die Stoßfuge wird vorzugsweise parallel zur Buchsenachse angebracht. Um bei der Herstellung und beim Transport gerollter Buchsen ein Verhaken der Buchsen untereinander im Bereich der offenen Stoßfuge zu vermeiden und um das Einpressen solcher Buchsen in das Lagergehäuse zu vereinfachen, können gerollte Buchsen durch Verklinkung der Stoßfuge geschlossen sein. Für die Herstellung gerollter Buchsen mit verklinkter Stoßfuge sind an dem einen Stoß des Bandabschnitts wenigstens eine U-förmige Ausklinkung und an dem unmittelbar daran angrenzenden Stoßbereich jeweils ein sich senkrecht zur Buchsenachse erstreckendes Horn angebracht. An dem gegenüberliegenden Stoß des Bandabschnitts befindet sich ein aus Hals und rundem Kopf bestehender Lappen, wobei der Hals am Grund mit sich hinter den Stoß erstreckenden im wesentlichen senkrecht zur Buchsenachse verlaufenden Hinterschneidungen versehen ist. Beim Rollen der Gleitlagerbuchse wird der Lappen in die U-förmige Ausklinkung eingeschoben und der Formschluß dadurch erreicht, daß die beiden Hörner in die jeweilige Hinterschneidung hineinverformt werden. Ein wesentlicher Nachteil gerollter Buchsen für Gleitlager mit verklinkter Stoßfuge ist jedoch darin zu sehen, daß durch die vorstehend beschriebene Gestaltung der Stöße des Bandabschnitts je nach Durchmesser und/oder Lagerbreite die Schneidlinien so angeordnet sind, daß ein Werkstoffverschnitt von bis zu 20 % entsteht. Diesen Nachteil kann man dadurch ausgleichen, daß der Umriß des Lappens dem Umriß der Ausklinkung entspricht, der Kopf des Lappens im wesentlichen die Form eines Rechtecks mit abgerundeten Ecken besitzt, die Länge B des Halses des Lappens dem 0,8- bis 1,4-fachen und die Länge der parallel zu den Stirnseiten des Bandabschnitts verlaufenden Seiten des Lappenkopfes dem 0,6- bis 1,2-fachen der Dicke des Gleitlagerwerkstoffs entspricht (DE-OS 33 16 767).

Nach DIN 1494 besitzen gerollte Buchsen für Gleitlager mit offener oder verklinkter Stoßfuge bei Nennmaßen für die Gesamtwanddicke von 0,75 bis 2,5 mm ohne Bearbeitungszugabe in der Lagerbohrung zulässige Abmaße von + 0,005 bis - 0.040 mm je nach Nennmaß. Da bei der Herstellung bzw. Montage der gerollten Buchsen, die in der Lagerbohrung nicht spanend bearbeitet werden können, eine Stauchung des Gleitwerkstoffs im Bereich der Stoßfuge erfolgt, lassen sich die zulässigen Abmaße nur mit einem vergleichsweise erheblichen Bearbeitungsaufwand herstellen.

Es ist die Aufgabe der vorliegenden Erfindung, die zulässigen Abmaßbereiche der Nennmaße einzuengen und den notwendigen Herstellungsaufwand dafür vergleichsweise deutlich zu senken.

Die Lösung dieser Aufgabe besteht darin, daß die Stoßfuge vollständig oder auch nur teilweise, vorzugsweise punktförmig, durch Ladungsträgerstrahlschweißen geschlossen ist.

Durch diese Maßnahme gelingt es, die zulässigen Abmaße der Nennmaße gegenüber den in der DIN 1494, Tabelle 2, Reihe B angegebenen Abmaßen um bis zur Hälfte zu reduzieren, wenigstens jedoch kleiner als 0,010 mm zu gestalten.

Bedingt durch die Einengung der zulässigen Abmaßbereiche ergibt sich ein vergleichsweise geringeres Laufspiel, dadurch ein wesentlich ruhigerer Lauf, so daß die gerollten Gleitlagerbuchsen insbesondere in solchen Stoßdämpferelementen eingesetzt werden können, durch die eine elektronische Abtastung der Fahrbahn erfolgt.

Die erfindungsgemäß gestaltete gerollte Lagerbuchse ist in den Zeichnungen beispielhaft dargestellt, die nachstehend erläutert werden.

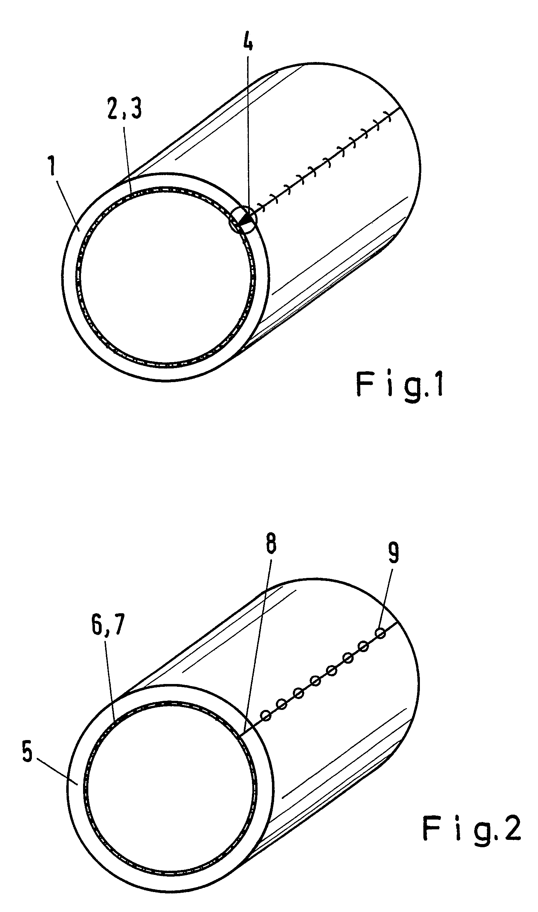

Fig. 1 zeigt in isometrischer Darstellung eine gerollte Buchse für Gleitlager aus einer Stahlschicht (1) mit porös aufgesinterter Zinnbronzeschicht (2), deren Füllung und Deckschicht (3) aus Polytetrafluoräthylen mit Zusätzen, wie 20 % Bleipulver, bestehen und bei der die Stoßfuge (4) auf ganzer Breite durch Laserstrahlschweißen geschlossen ist.

In Fig. 2 ist in isometrischer Darstellung eine gerollte Buchse für Gleitlager wiedergegeben, die aus einer Stahlschicht (5) mit porös aufgesinterter Zinnbronzeschicht (6) mit darauf aufgebrachter Thermoplastschicht (7) aufgebaut ist und bei der die Stoßfuge (8) durch mehrere durch Laserstrahlschweißen erzeugte Schweißpunkte (9) geschlossen ist.

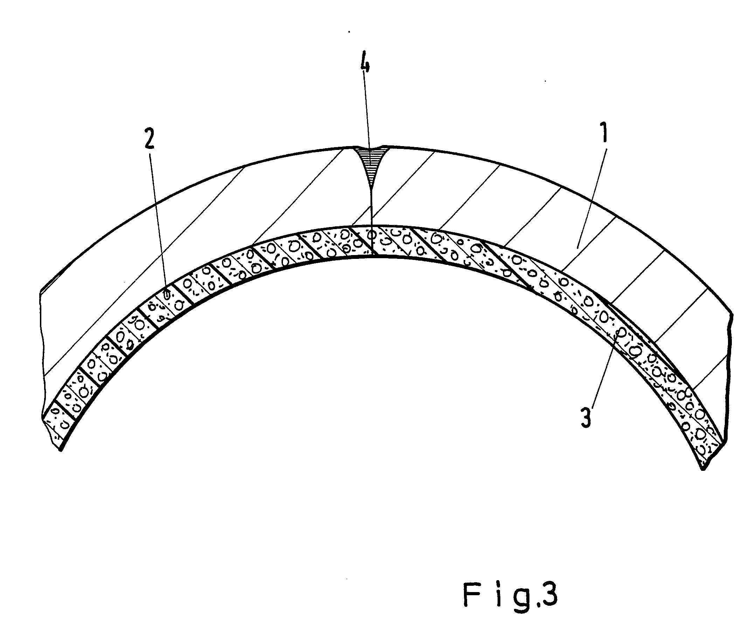

In Fig. 3 ist ein Ausschnitt der gerollten Buchse gemäß Fig. 1 aus dem Bereich der Stoßfuge (4) vergrößert dargestellt.

**Ansprüche**

Gerollte Buchse für Gleitlager, hergestellt aus einem Bandabschnitt, vorzugsweise aus Mehrschicht-Werkstoff, insbesondere der Kombination Stahl/Kunststoff, mit über die ganze Lagerbreite gehender Stoßfuge und ohne Bearbeitungszugabe in der Lagerbohrung, dadurch gekennzeichnet, daß die Stoßfuge ganz oder teilweise durch Ladungsträgerstrahlschweißen verschlossen ist.

4

2,3

1

Fig.1

8

9

6,7

5

Fig.2

Fig.3